# EUROPEAN PATENT SPECIFICATION

(11) **EP 2 356 530 B1**
(45) Date of publication and mention of the grant of the patent: **23.04.2014**
(21) Application number: 09826360.1
(22) Date of filing: 11.11.2009
(51) Int. Cl.: G05D 17/02, B23P 19/06, B25B 23/145

(54) **METHOD AND DEVICE FOR CALIBRATION OF A PRESSURE AIR SUPPLY SYSTEM FOR A PNEUMATIC POWER WRENCH INCLUDING A REMOTELY LOCATED PRESSURE CONTROL UNIT**
VERFAHREN UND VORRICHTUNG ZUR KALIBRIERUNG EINES DRUCKLUFTZUFUHRSYSTEMS FÜR EINEN PNEUMATISCHEN SCHRAUBER MIT ENTFERNTER DRUCKSTEUEREINHEIT
PROCÉDÉ ET DISPOSITIF D'ÉTALONNAGE D'UN SYSTÈME D'ALIMENTATION EN AIR COMPRIMÉ POUR UNE BOULONNEUSE PNEUMATIQUE COMPRENANT UNE UNITÉ DE COMMANDE DE PRESSION À DISTANCE

(30) Priority: 12.11.2008 SE 0802378
(43) Date of publication of application: 17.08.2011
(73) Proprietor: Atlas Copco Industrial Technique AB, 105 23 Stockholm (SE)
(72) Inventor: GRUBBSTRÖM, Carl, Johan, 13241 Saltsjö-Boo (SE)
(86) International application number: PCT/SE2009/000490
(87) International publication number: WO 2010/056176

(56) References cited:
- EP-A1- 0 802 023
- EP-A2- 0 363 587
- WO-A1-02/102554
- GB-A- 1 591 355
- GB-A- 2 035 171
- GB-A- 2 265 728
- US-A- 5 284 217

## Description

The invention relates to a method and a device for calibration of a pressure air supply system for a pneumatic power wrench including a remotely located pressure control unit. In particular, the invention relates to a method and a device for improving the accuracy of the attained final torque magnitude in relation to a desired target torque level at tightening of screw joints by a pneumatic power wrench of the type having an onboard torque sensing means and supplied with motive pressure air via a conduit from a remotely located air pressure control unit.

WO 02/102554 and EP 0363587 disclose pneumatic tools and methods of controlling the air pressure in such tools.

In air supply systems of the above type there is always a tendency of delays in stop-of-tightening of the power wrench, which depends on a momentarily sustained pressure due to a relatively slow pressure drop in the air conduit between the air pressure control unit and the power wrench after the pressure air supply is shut-off by the control unit. This sustained air pressure has a certain duration and is due to the size of the air volume entrapped in the pressure air supply system between the control unit and the power wrench, and the size of this air volume is dependent on the length and inner dimension of the air conduit actually used. This means that the entrapped air volume as well as the duration of the sustained air pressure may vary from one power wrench application to another. Accordingly, the power wrench response to an air pressure reduction or shut-off at the remotely located control unit will vary as well. At the desired target torque level the pressure air supply shall be quickly reduced in the air supply system to prevent a sustained air pressure from causing a delayed stop-of-tightening of the power wrench and, hence, a torque overshoot. This is particularly important at impulse wrenches where a sus-tained pressure in the air conduit after a pressure reduction or shut-off has taken place at the control unit will cause extra torque impulses and hence a torque overshoot. However, a certain delay in pressure reduction will always occur, no matter how quick a pressure release is accomplished at the attainment of the target torque level, which means that there will always be risk for overtightening screw joints, so called stiff joints in particular where a rapid torque growth easily causes a torque overshoot.

One previous solution to the problem with delays in stop-of-tightening due to entrapped air volume in the pressure air supply system means that the power shut-off point of the control unit is calibrated with respect to a selected pressure air supply conduit with certain specified dimensions. This means that the relatively slow pressure drop at the power wrench after power shut-off may be compensated for once and for all. The drawback with this method is that it does not provide any flexibility as to different power wrench applications requiring different lengths and/or other dimensions of the pressure air supply conduit. So, exchanging the very pressure air supply conduit for which the point of power shut-off has been calibrated for another pressure air supply conduit of other dimensions would result in an impaired accuracy of the final tightening result.

It is an object of the invention to solve the above mentioned problem and to improve the final torque accuracy of a remotely controlled pneumatic power wrench in relation to a desired target torque level by advancing the pressure shut-off or shifting point in response to a measured time delay caused by the entrapped air volume in the pressure air conduit, irrespectively of the dimensions of the currently used pressure air conduit.

It is a further object of the invention to provide a method and a device for performing a quick pressure air conduit analysis and pressure shifting point adjustment for a remotely controlled pneumatic power wrench without the need of any pressure gauge at the power wrench end of the conduit.

Still further objects and advantages of the invention will appear from the following specification and claims.

A preferred embodiment of the invention is described below in detail with reference to the accompanying drawings.

In the drawings
Fig. 1 shows a pneumatic power wrench connected via a pressure air supply system to a remote pressure control unit.
Fig. 2 shows a schematic illustration of the pressure control and calibration unit.
Fig. 3 shows a torque/time diagram illustrating an advance shifting point in relation to the torque target level.
Fig. 4 shows a diagram illustrating the pressure response in the pressure air conduit at pressure air shut-off.
Fig. 5 shows a diagram illustrating the pressure response in the pressure air conduit to repeated pressure changes in the form of repeated pressure pulses during a calibration sequence.

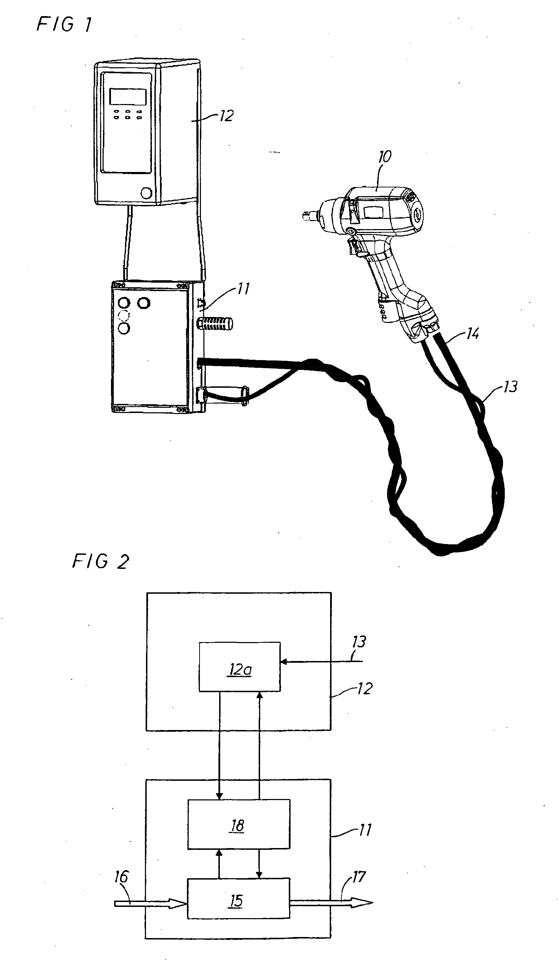

The power wrench system shown in Fig.1 comprises a portable pneumatic power wrench 10, a stationary and remotely located programmable pressure air control unit 11, a power wrench operation control unit 12 including a calculation and calibration unit 12a and communicating with the pressure air control unit 11. A pressure air supply system including a pressure air conduit 14 connects the power wrench 10 to the pressure air control unit 11. The pressure air supply system includes not only the pressure air conduit 14 but also non-illustrated conduit connection pieces, couplings etc. which together define a certain internal air volume. This air volume will act as an elastic cushion and causes delays in pressure variations including power shut-off initiated by the pressure air control unit 11.

The power wrench 10 is provided with a non-illustrated torque sensing means which is connected to the operation control unit 12 via an electric wiring 13 which practically is associated with the pressure air conduit 14, as illustrated in Fig. 1. The operation control unit 12 is programmed to control the operation parameters of the power wrench 10 during tightening operations such that intended tightening results are obtained within acceptable parameter value limits. The power wrench 10 may be of the torque impulse type, impact type or continuous torque type.

As schematically illustrated in Fig. 2, the pressure air control unit 11 comprises a pressure regulating valve 15 which is arranged to change the supply pressure of the motive air to the power wrench 10 at desired torque levels, or just to shut off the pressure air supply at a desired target torque level. The pressure regulating valve 15 is connected to a pressure air source via an inlet passage 16 and to the power wrench 10 via an outlet passage 17. The pressure air control unit 11 further comprises a programmable valve activating unit 18 which communicates with the operation control unit 12 and which is intended to control the operation of the pressure air valve 15 in accordance with a certain air supply system calibration program. This program involves changes of the air pressure in one or more shifting points between two or more pressure levels, either in a single step operation or in repeated pulsating pressure changes for exploring the pressure change time delay caused by the entrapped air volume in the pressure air supply system including the air conduit 14 between the pressure control unit 11 and the power wrench 10.

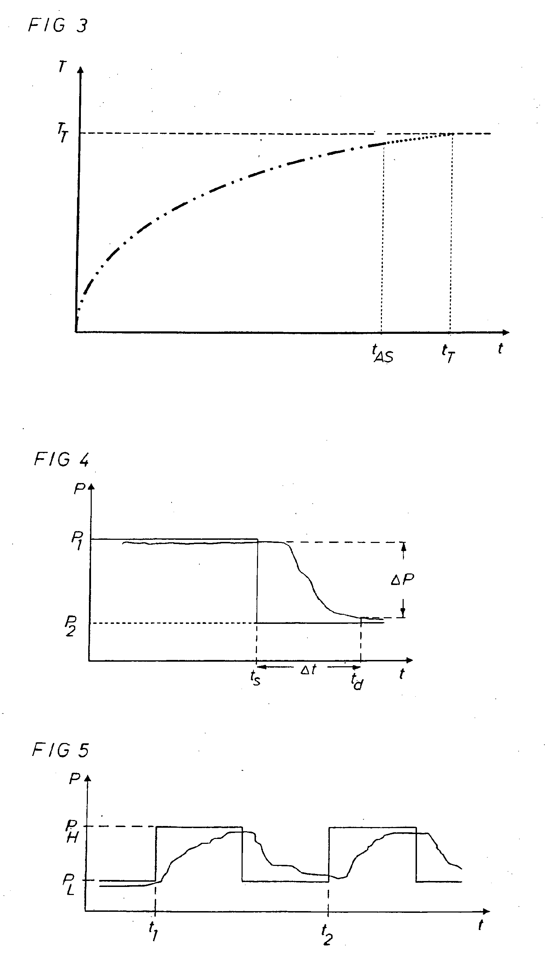

In Fig. 3 there is illustrated a typical torque - time curve for a screw joint tightening operation wherein an impulse type power wrench is used. In order to hit the target torque level T_{T} without any torque overshoot the power shut-off has to be initiated in a shift point t_{S}, because the entrapped air volume in the pressure air supply system will cause a time delay in power reduction at the power wrench. This makes the power wrench continue to produce torque over an extended time interval and stop at t_{T}. In order to prevent the continued torque production to cause a torque overshoot, i.e. a torque result that is above the desired target torque level, the power shut-off has to be initiated at an advance shut off point t_{AS}. By calculating the time delay caused by the actually used pressure air supply system including a certain pressure air conduit length the advance shut off point t_{AS} is located so as to make the power wrench stop at the torque target without any undesirable overshoot.

The curve shown in Fig. 3 is a typical impulse wrench curve, and the advance shut off point shall be located at such a point that no further impulses will be generated as the target torque level is reached. In case of a continuous torque type power wrench it is also necessary to prevent the wrench from generating an inertia related torque addition. If not brought down to a dead stop the power wrench speed should be reduced to such a low level that the inertia forces of the rotating parts of the power wrench do not add to the obtained tightening torque obtained at t_{T}.

In Fig. 4 there is illustrated a relationship between a sudden pressure reduction at the pressure air control unit 11 from a first pressure level P₁ to a second pressure level P₂ and the responsive pressure at the power wrench end of the air supply conduit 14. The pressure reduction is performed at a shifting point t_{S}, and the time interval Δt between that shifting point and a point t_{R} where the air pressure at the power wrench has been reduced by a pressure difference ΔP is indicated. If the first pressure level P₁ is the normal operation pressure supplied to the power wrench and the second reduced pressure P₂ is low enough to cause stop of tightening the indicated time interval Δt is in fact the time delay that has to be compensated for by an advance shut off point.

A preferred example of the method according to the invention is illustrated in Fig. 5 and comprises a repeated number of pressure shifting points with a time interval between them indicated at t₁ and t₂. The pressure pulses have a constant amplitude P_{H} - P_{L}. The calibration method according to the invention means that an initial pressure pulse is introduced in the pressure air conduit 14, and a feed back responsive relay circuit is arranged to respond to the "echo", i.e. the feed back pressure pulse from the pressure air conduit 14, and to send in further pressure pulses in the conduit as a result. This feed back relay control of the pressure pulse inducement in the conduit results in a pressure resonance oscillation in the conduit 14. The feed back frequency of that oscillation is dependent on the dynamic features of the conduit 14 including the time of pressure pulse propagation through the conduit. This feed back controlled resonance frequency of the pressure oscillation corresponds to a certain pulse length t₂ - t₁ from which a pressure change propagation may be calculated for the actual pressure air conduit 14. This propagation speed corresponds to the time delay for which a new calculated advance shut off point t_{As} is determined for a power wrench for avoiding torque overshoots at screw joint tightening operations.

Preferably, a pressure air supply system test cycle including introduction of a pressure pulses by means of a relay circuit in the pressure air conduit is performed automatically each time the system is started up. A resonance frequency with a certain wave length is determined and a time delay for the actually used pressure air conduit is calculated. This will guarantee that the power wrench control is always calibrated for the time delay caused by the actually used pressure air supply system, either it is changed from a previous power wrench operation occasion or not.

The pressure air supply system calibration process starts automatically each time the system is started up to ensure that correct time delay compensation data are saved in the process control unit 12 and applied when starting a screw joint tightening process. When starting up the system the control unit 12 sends a calibration start signal to the pressure air control unit 11 whereby the latter starts a calibration process by pressurizing the pressure air supply system. In a system where the power wrench is provided with a suitable pressure sensing means a certain constant pressure P₁ is applied on the system followed by a quick pressure drop to a second pressure level P₂ accomplished by the pressure regulating valve 15 in a pressure shifting point t_{S}, and the time interval Δt between the shifting point ts and a second point t_{d} is indicated wherein the pressure has fallen by a certain predetermined interval ΔP at the power wrench. See diagram in Fig. 4. This time delay Δt in pressure shifting response is saved in the control unit 12 and utilized for creating an advance power wrench shut off point t_{AS} and thereby accomplish a time delay compensated shut off action of the pressure regulating valve 15. See diagram in Fig. 3.

In systems where no pressure sensing means is used at the power wrench the calibration process comprises introduction of a number of succeeding pressure pulses of a certain amplitude P_{H}- P_{L} into the pressure air conduit 14. See diagram in Fig. 5. For each pressure pulse induced in the pressure air conduit 14 there is a pressure response pulse in the pressure air conduit 14. Depending on the size, i.e. the internal volume of the actual pressure air supply system, there will be a system specific pressure pulse response frequency, i.e. response pressure pulses of a specific wave length. The calibration process includes a variation of the frequency of the induced pressure pulses until the wave length t₂ - t₁ of the induced,pulses corresponds to the wave length of the response pulses whereby a resonance is indicated in the system. By having determined the resonance frequency/wave length of the pressure air supply system the control unit 12 is able to establish a time delay compensating advance shut off point for tightening operations to be performed with the actual system.

The pressure pulse based calibration process is very advantageous in that it gives a reliable result and is performed during a few seconds or even parts of a second when applied on small size systems. Neither does it require any pressure sensing means at the power wrench with feed back signal transmission.

## Claims

1. Method for calibration of a pressure air supply system for a pneumatic power wrench (10) including a remotely located pressure air control unit (11), and a pressure air supply conduit (14) connecting the power wrench (10) to the pressure air control unit (11), wherein the pressure air control unit (11) controls the operation of the power wrench (10) by shifting the pressure of the air supplied to the power wrench from a first pressure level (P_{H}) to a second pressure level (P_{L}), at an air pressure shifting time point (t_{S}), to compensate for a time delay Δt) caused by the pressure change propagation time through the pressure air conduit,
**characterized by** the following steps:
• introducing via a relay type control means a number of repeated pressure pulses of a certain amplitude (P_{H}-P_{L}) into the pressure air supply conduit (14),
• indicating the pulse length (t₂-t₁) of the relay controlled pressure pulses at a resonance oscillation in the pressure air conduit (14),
• calculating said time delay (Δt) in response to said indicated pulse length (t₂-t₁), and
• determining an advance air pressure shifting time point (t_{As}) in view of said calculated time delay (Δt).

2. Method according to claim 1, wherein said shifting time point (t_{S}) is a power wrench shut off point, and said advance air pressure shifting time point (t_{AS}) is a time delay compensated advance pressure air shut off point.

3. Device for calibration of the pressure air supply system for a pneumatic power wrench (10) including a remotely located pressure air control unit (11), and a pressure air supply conduit (14) connecting the power wrench (10) to the pressure air control unit (11), wherein the pressure air control unit (11) is arranged to control the power wrench operation by shifting the pressure of the air supplied to the power wrench, from a first pressure level (P_{H}) to a second pressure level (P_{L}), at an air pressure shifting time point (t_{S}), to compensate for a time delay (Δt) caused by the pressure change propagation time through the pressure air conduit,
**characterized in that**
• a relay type control means is arranged to induce repeated pressure pulses of a certain amplitude (P_{H}-P_{L}) into the pressure air supply conduit (14),
• a means for indicating the pulse length (t₂-t₁) of the relay controlled pressure pulses at a resonance oscillation in the pressure air conduit (14), and
• a means for calculating said time delay (Δt) in response to said indicated pulse length (t₂-t₁) and determining an advance air pressure shifting time point (t_{AS}) in response to said calculated time delay (Δt).

4. Device according to claim 3,
**characterized in that** said pressure air control unit (11) comprises a shut-off valve (15) for interrupting pressure air supply to the power wrench (10) at said advance shifting time point (t_{AS}).

## Patentansprüche

1. Verfahren zum Kalibrieren eines Druckluftzufuhrsystems für einen elektrischen pneumatischen Schraubenschlüssel (10), enthaltend eine ferngesteuerte Druckluftsteuereinheit (11) und eine Druckluftzufuhrleitung (14), die den elektrischen Schraubenschlüssel (10) mit der Druckluftsteuereinheit (11) verbindet, wobei die Druckluftsteuereinheit (11) den Betrieb des elektrischen Schraubenschlüssels (10) steuert, indem sie den Druck der an den elektrischen Schraubenschlüssel zugeführten Luft von einer ersten Druckhöhe (P_{H}) auf eine zweite Druckhöhe (P_{L}) zu einem Luftdruckschaltzeitpunkt (T_{S}) schaltet, um eine Zeitverzögerung (Δt) zu kompensieren, die durch die Druckänderungslaufzeit durch die Druckluftleitung bewirkt wird,
**gekennzeichnet durch** die folgenden Schritte:
• Einbringen einer Mehrzahl von wiederholten Druckimpulsen einer gewissen Amplitude (P_{H}-P_{L}) über ein Steuermittel vom Relaistyp in die Druckluftzufuhrleitung (14),
• Anzeigen der Impulslänge (t₂-t₁) der relaisgesteuerten Druckimpulse bei einer Resonanzschwingung in der Druckluftleitung (14),
• Berechnen der Zeitverzögerung (Δt) in Reaktion auf die angezeigte Impulslänge (t₂-t₁), und
• Ermitteln eines Vorschubluftdruckschaltzeitpunkts (t_{AS}) anhand der berechneten Zeitverzögerung (Δt).

2. Verfahren nach Anspruch 1, wobei der Schaltzeitpunkt (t_{S}) ein Abschaltpunkt für den elektrischen Schraubenschlüssel ist, und wobei der Vorschubluftdruckschaltzeitpunkt (t_{AS}) eine zeitverzögerungskompensierter Vorschubluftdruckabschaltpunkt ist.

3. Einrichtung zum Kalibrieren des Druckluftzufuhrsystems für einen elektrischen pneumatischen Schraubenschlüssel, enthaltend eine ferngesteuerte Druckluftsteuereinheit (11) und eine Druckluftzufuhrleitung (14), die den elektrischen Schraubenschlüssel (10) mit der Druckluftsteuereinheit (11) verbindet, wobei die Druckluftsteuereinheit (11) so ausgelegt ist, dass sie den Betrieb des elektrischen Schraubenschlüssels (10) steuert, indem sie den Druck der an den elektrischen Schraubenschlüssel zugeführten Luft von einer ersten Druckhöhe (P_{H}) auf eine zweite Druckhöhe (P_{L}) zu einem Luftdruckschaltzeitpunkt (t_{S}) schaltet, um eine Zeitverzögerung (Δt) zu kompensieren, die durch die Druckänderungslaufzeit durch die Druckluftleitung bewirkt wird,
**dadurch gekennzeichnet**, dass/durch
• ein Steuermittel vom Relaistyp so ausgelegt ist, dass es wiederholte Druckimpulse einer gewissen Amplitude (P_{H}-P_{L}) in die Druckluftzufuhrleitung (14) induziert,
• ein Mittel zum Anzeigen der Pulslänge (t₂-t₁) der relaisgesteuerten Druckimpulse bei einer Resonanzschwingung in der Druckluftleitung (14), und
• ein Mittel zum Berechnen der Zeitverzögerung (Δt) in Reaktion auf die angezeigte Impulslänge (t₂-t₁) und Ermitteln eines Vorschubluftdruckschaltzeitpunkts (t_{As}) in Reaktion auf die berechnete Zeitverzögerung (Δt).

4. Einrichtung nach Anspruch 3,
**dadurch gekennzeichnet, dass** die Druckluftsteuereinheit (11) ein Absperrventil (15) zum Unterbrechen der Druckluftzufuhr zum elektrischen Schraubenschlüssel (10) zum Vorschubschaltzeitpunkt (t_{AS}) umfasst.

## Revendications

1. Procédé d'étalonnage d'un système d'alimentation en air comprimé pour une boulonneuse pneumatique (10) comprenant une unité de commande d'air comprimé à distance (11) et un conduit d'alimentation en air comprimé (14) reliant la boulonneuse (10) à l'unité de commande d'air comprimé (11), l'unité de commande d'air comprimé (11) commandant le fonctionnement de la boulonneuse (10) par commutation de la pression de l'air fourni à la boulonneuse d'un premier niveau de pression (P_{H}) à un second niveau de pression (P_{L}), à un instant de commutation de pression d'air (t_{S}), pour compenser un retard temporel (Δt) causé par le temps de propagation de changement de pression à travers le conduit d'air comprimé, **caractérisé par** les étapes suivantes :
• l'introduction, par l'intermédiaire d'un moyen de commande de type relais, d'un nombre d'impulsions de pression répétées d'une certaine amplitude (P_{H}-P_{L}) dans le conduit d'alimentation en air comprimé (14),
• l'indication de la durée d'impulsion (t₂-t₁) des impulsions de pression commandées par relais à une oscillation de résonance dans le conduit d'air comprimé (14),
• le calcul dudit retard temporel (Δt) en réponse à ladite durée d'impulsion indiquée (t₂-t₁), et
• la détermination d'un instant de commutation de pression d'air avancé (t_{AS}) au vu dudit retard temporel calculé (Δt).

2. Procédé selon la revendication 1, dans lequel ledit instant de commutation (t_{S}) est un instant d'arrêt de boulonneuse, et ledit instant de commutation de pression d'air avancé (t_{AS}) est un instant de coupure d'air comprimé avancé à retard temporel compensé.

3. Dispositif d'étalonnage du système d'alimentation en air comprimé pour une boulonneuse pneumatique (10) comprenant une unité de commande d'air comprimé à distance (11) et un conduit d'alimentation en air comprimé (14) reliant la boulonneuse (10) à l'unité de commande d'air comprimé (11), l'unité de commande d'air comprimé (11) étant agencée pour commander le fonctionnement de la boulonneuse par commutation de la pression de l'air fourni à la boulonneuse, d'un premier niveau de pression (P_{H}) à un second niveau de pression (P_{L}), à un instant de commutation de pression d'air (t_{S}), pour compenser un retard temporel (Δt) causé par le temps de propagation de changement de pression à travers le conduit d'air comprimé,
**caractérisé par le fait que** :
• un moyen de commande de type relais est agencé pour induire des impulsions de pression répétées d'une certaine amplitude (P_{H}-P_{L}) dans le conduit d'alimentation en air comprimé (14),
• un moyen pour indiquer la durée d'impulsion (t₂-t₁) des impulsions de pression commandées par relais à une oscillation de résonance dans le conduit d'air comprimé (14), et
• un moyen pour calculer ledit retard temporel (Δt) et déterminer un instant de commutation de pression d'air avancé (t_{AS}) en réponse audit retard temporel calculé (Δt).

4. Dispositif selon la revendication 3, **caractérisé par le fait que** ladite unité de commande d'air comprimé (11) comprend une vanne de coupure (15) pour interrompre l'alimentation en air comprimé de la boulonneuse (10) audit instant de commutation avancé (t_{AS}).
